Europäisches Patentamt

European Patent Office

Office européen des brevets

(11) Veröffentlichungsnummer: **0 149 820**
**A2**

(12) **EUROPÄISCHE PATENTANMELDUNG**

(21) Anmeldenummer: **84115802.5**

(22) Anmeldetag: **25.11.82**

(51) Int. Cl.⁴: **B 01 D 25/12**

(30) Priorität: 15.12.81 DE 3149665
04.06.82 DE 3221249
20.11.82 DE 3242917

(43) Veröffentlichungstag der Anmeldung:
**31.07.85 Patentblatt 85/31**

(84) Benannte Vertragsstaaten:
**AT BE CH DE FR GB IT LI**

(80) Veröffentlichungsnummer der früheren
Anmeldung nach Art. 76 EPÜ: **0 081 715**

(71) Anmelder: Klinkau & Co. GmbH
Raiffeisenstrasse 6
D-8952 Marktoberdorf-Leuterschach(DE)

(72) Erfinder: Stanik, Reimund
Bischof-Ketteler-Strasse 10
D-8952 Marktoberdorf(DE)

(72) Erfinder: Klinkau, Werner
Fischackerweg 9
D-8131 Berg am Starnbergersee 1(DE)

(74) Vertreter: Goddar, Heinz J., Dr. et al,
FORRESTER & BOEHMERT Widenmayerstrasse 4/I
D-8000 München 22(DE)

(54) **Membranfilterplatte für eine Filterpresse.**

(57) Es handelt sich um eine Membranfilterplatte, bei der die Trägerplatte an der der Membran zugewandten Seite eine Schmiegefläche mit kontinuierlicher Biegung im Randbereich der Platte aufweist.

FIG. 8

EP 0 149 820 A2

**0149820**

FB 512/B

Firma Klinkau & Co. GmbH, Raiffeisenstraße 6,
8952 Marktoberdorf-Leuterschach

────────────────────────────────────────────

Membranfilterplatte für eine Filterpresse

────────────────────────────────────────────

Die Erfindung betrifft eine Membranfilterplatte nach
dem Oberbegriff des Patentanspruches 1.

Eine Schwierigkeit besteht bei den bislang verwendeten Membranfilterplatten darin, daß die mechanische Beanspruchung
der Membran bei den wechselnden Druckbeanspruchungen der vorstehend beschriebenen Art außerordentlich hoch ist, so
daß es leicht zu einem Bruch der Membran nahe der Verbindungslinie mit dem Dichtrand kommen kann. Dieser Nachteil
wiegt umso schwerer, als es bei der bislang weitestgehend
gehandhabten einstückigen Ausbildung der Membran mit dem
Dichtrand und der Trägerplatte nicht möglich ist, die Materialeigenschaften der Membran unabhängig von den an die Trägerplatte und den Dichtrand zu stellenden Anforderungen
auf hohe Biegefestigkeit bzw. Flexibilität etc. zu optimieren.

423

Aus der DE-A-2 933 O96 ist eine Membranfilterplatte
der eingangs genannten Art bekannt, bei der die Auslenkung der Membran in der Filtrations- wie in der
Abpreßphase durch Biegung um eine einzige, scharnierartige Sollbiegelinie erfolgt. Hierdurch treten beträchtliche Materialbeanspruchungen auf, die zu
frühzeitigen Ermüdungserscheinungen führen können.

Der Erfindung liegt die Aufgabe zugrunde, eine Membranfilterplatte der eingangs genannten Art zu schaffen, deren Membran gegenüber den bislang verwendeten eine wesentlich verbesserte Lebensdauer aufweist, wobei es weiterhin bevorzugt
möglich sein soll, die Materialeigenschaften der einzelnen
Bauelemente der Membranfilterplatte, insbesondere der Membran selbst, im Hinblick auf den jeweiligen Anwendungszweck
zu optimieren.

Erfindungsgemäß wird diese Aufgabe durch die im Kennzeichen des Patentanspruches 1 aufgeführten Merkmale
gelöst.

Die erfindungsgemäß vorgesehene Schmiegefläche mit kontinuierlich sich ändernder Biegung hat den besonderen
Vorteil, die Materialbeanspruchungen der Membran im
Übergangsbereich zwischen Dichtrand und Zentralbereich
besonders gering zu halten.

Durch die Schmiegefläche mit kontinuierlich sich ändernder Krümmung, gegebenenfalls unter Belassung eines ebenen Mittelbereiches, im Übergangsbereich zwischen dem Zentralbereich der Membranfilterplatte und dem Dichtrand gelingt es, die Materialbeanspruchung der Membran beim Übergang von Normalstellung in Preß- bzw. Filtrationsstellung soweit zu senken, daß das Membranmaterial in vorteilhafter Weise auf die übrigen Anforderungen hin, insbesondere beispielsweise chemischer Beständigkeit gegenüber dem zu filternden Medium, optimiert werden kann. Durch die dabei vorgesehene Form des Übergangsbereiches der Trägerplatte wird eine wesentlich verringerte Oberflächenspannung der Membran in den verschiedenen Betriebszuständen erreicht, wodurch eine erheblich verbesserte Widerstandsfähigkeit gegenüber chemischer Beanspruchung (Spannungskorrosion) erzielt wird. Darüber hinaus lassen sich dabei infolge der vorgesehenen Schmiegefläche wesentlich dickere Membranen verwenden als bei Vorliegen eines Einfach- oder Mehrfachscharnieres im Biegebereich der Membran, wodurch die Lebensdauer der Membran und deren Beanspruchbarkeit weiter gesteigert werden.

Besonders vorteilhafte Ausführungsformen der Erfindung sind Gegenstand der Unteransprüche.

Es sei darauf hingewiesen, daß unter dem Ausdruck "schräg", soweit er in Verbindung mit dem Verlauf der Anlagefläche der Trägerplatte auf die Trägerplattenmittelebene hin bzw. in Verbindung mit der Übergangsfläche des Basisteiles und/oder des Stützteiles sowie

0149820

in Verbindung mit der Schmiegefläche des Stützringes und schließlich auch der Stirnfläche des Stützringes in ihrem Verlauf auf die Trägerplattenmittelebene hin verwendet wird, ein Winkel von 3 bis 15$^{o}$, vorzugsweise 5 bis 10$^{o}$, verstanden wird.

Die erfindungsgemäß vorgeschlagene Membranfilterplatte kann aus einer Vielzahl geeigneter Werkstoffe hergestellt werden. Beispielsweise kann die Trägerplatte in vorteilhafter Weise aus Polypropylen hergestellt werden, ebenso wie dieses Material auch sehr gut für den Dichtrandrahmen geeignet ist. Wegen der notwendigen Toleranzanforderungen scheiden allerdings schwer bearbeitbare Materialien in der Regel aus, in dem Fall nämlich, in dem die erforderlichen Toleranzanforderungen nur durch eine mechanische Nacharbeit erreicht werden könnten. Auch Hartschaumstoffe lassen sich zusätzlich zu herkömmlichen, für derartige Bauteile bekannten Thermoplasten in vorteilhafter Weise verwenden.

Werden thermoplastische Kunststoffe eingesetzt, so läßt sich das Umformverfahren in vorteilhafter Weise zur Herstellung von Membranfilterplatten der erfindungsgemäßen Art verwenden. Die bei verschiedenen Ausführungsformen verwendeten Dübel lassen sich ebenfalls aus einer Vielzahl von Werkstoffen herstellen, wobei die Aufgabe der Dübel einmal im Zusammenhalt und der maßlichen Fixierung der jeweiligen Einzelteile besteht, zum anderen aber auch darin, bestimmte Kräfte aufzunehmen, so wie beispielsweise die im wesentlichen senkrecht zur Trägerplattenmittelebene verlaufenden Randdübel die Aufgabe haben, die auf die kammerseitige Schräge des Dichtrandes wirkende Innenkraft (Filtrationsdruck), soweit diese Kraftkomponente nicht durch die Reibungskraft in Dichtrandbereich, also durch den Schließdruck,
ausgeglichen werden kann, auf die Trägerplatte zu übertragen, damit ein Ausbiegen des Dichtrandes verhindert wird.
Die erforderliche Anzahl sowie die Dimensionierung der
Dübel, auch letzten Endes die Teilung und das Dübelmaterial
ergeben sich in für den Fachmann ohne weiteres ersichtlicher
Weise aus den jeweiligen konstruktiven Voraussetzungen.

Auch bei Verwendung an sich verschweißbarer Membranfilterplatten, bei denen alle Bauteile aus Polypropylen oder dergleichen bestehen, empfiehlt es sich aus Kostengründen gegebenenfalls, lediglich eine lokale Verschweißung, beispielsweise im Eckenbereich der Membranfilterplatten, vorzugsweise lediglich im Bereich der Eckbohrungen, vorzusehen,
wobei sich beispielsweise das Widerstandsschweißverfahren
(mit Kupferdraht-Einlage oder dergleichen) eignet, aber auch
die HF-Schweißung.

Wird eine auswechselbare Membran verwendet, so ist es in dem
Fall, daß die Membran selbst nicht aus dichtendem Material
besteht, wie Gummi, notwendig, in den Ecken, also in der
Umgebung der Eckbohrungen, Dichtungen vorzusehen, die im
übrigen natürlich auch beispielsweise um die Dübel angeordnet sein können, obwohl dies nicht unbedingt erforderlich
ist. Die Dicke der jeweiligen Dichtung entspricht natürlich
in etwa dejenigen der Membran, mit einer von der Shore-Härte
abhängigen Plustoleranz.

Es sei nochmals hervorgehoben, daß in dem Fall, daß keine
Verschweißung verwendet wird, wobei die einzelnen Teile also
ausschließlich durch die Dichtranddübel etc. bzw. Halteklammern miteinander zusammengehalten werden, eine freie Auswahl
der Werkstoffe für jedes Einzelteil möglich ist. Die Mem-

0149820

branen sind dabei auswechselbar. Es ist keine komplizierte
Oberflächengestaltung im Dichtrandrahmenbereich vorgesehen,
so daß also auch beim Auswechseln der Membran keine Toleranzprobleme auftreten können, sondern stets eine einwandfreie Abdichtung gewährleistet ist. Der Dichtrandrahmen läßt
sich im übrigen beispielsweise unter Einsatz thermoplastischer Werkstoffe in bekannten und bewährten Schweißkonstruktionen ausführen. Die Membran läßt sich in dem Fall, daß sie aus thermoplastischem Kunststoff hergestellt werden
soll, beispielsweise durch Prägen bzw. Umformen einer Extrudertafel oder auch durch Urformung aus Pulver oder Granulat
in der Preßform herstellen. Auch lassen sich Gummimembranen
in der erfindungsgemäß vorgesehenen ebenen, unkomplizierten
Form ohne weiteres vulkanisieren. Bei entsprechender Berücksichtigung dieser Werkstoffvariante läßt sich ein Formwerkzeug konstruieren, mittels dessen sowohl Membranen aus
Kunststoff als auch aus Gummi in nur einer Form herstellbar
sind, wodurch die Herstellungskosten der erfindungsgemäßen
Membranfilterplatte beträchtlich gesenkt werden können.
Trotz ihrer einfachen Form liegt die Membran vollkommen
dicht zwischen den Dichtrandrahmen, bedingt durch die
maßliche Gestaltung von Dichtrandrahmen und Trägerplatte,
wobei zwischen diesen Teilen eine randseitige, umlaufende
Auflage ausgebildet ist, auf welcher die Membran rundum
aufliegt und welche bewirkt, daß die Membran in der bereits
angegebenen und weiter unten noch im einzelnen diskutierten
Form zwei separate, jeweils nur für eine Bewegungsrichtung
vorgesehene, scharnierartige Bewegungszonen in den betreffenden Sollbiegelienien aufweist.

Weitere Merkmale und Vorteile der Erfindung ergeben sich aus
der nachfolgenden Beschreibung, in der Ausführungsbeispiele
anhand der Zeichnung im einzelnen erläutert sind. Dabei
zeigt:

Fig. 1 ein erstes Ausführungsbeispiel einer
Membranfilterplatte nach der Erfindung
in der Draufsicht;

Fig. 2 einen Eckbereich der Membranfilterplatte
von Fig. 1 in vergrößerter Darstellung
mit Detailwiedergabe der Zu- und Ablaufbohrungen, teilweise geschnitten;

Fig. 3 einen Schnitt entlang der Linie V-V von
Fig. 2;

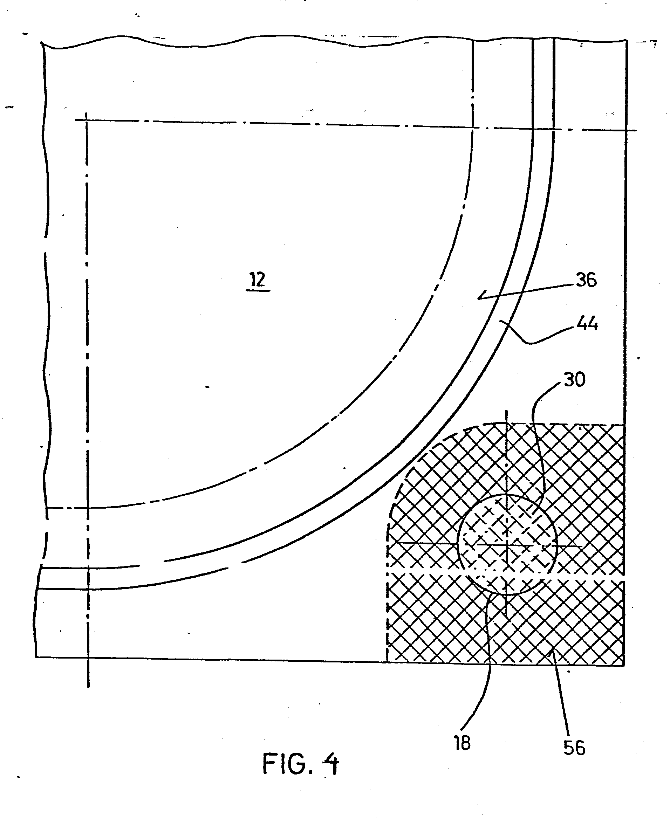

Fig. 4 ein abgewandeltes Ausführungsbeispiel der
Ausbildung eines Membranfilterplatteneckbereiches in der Draufsicht;

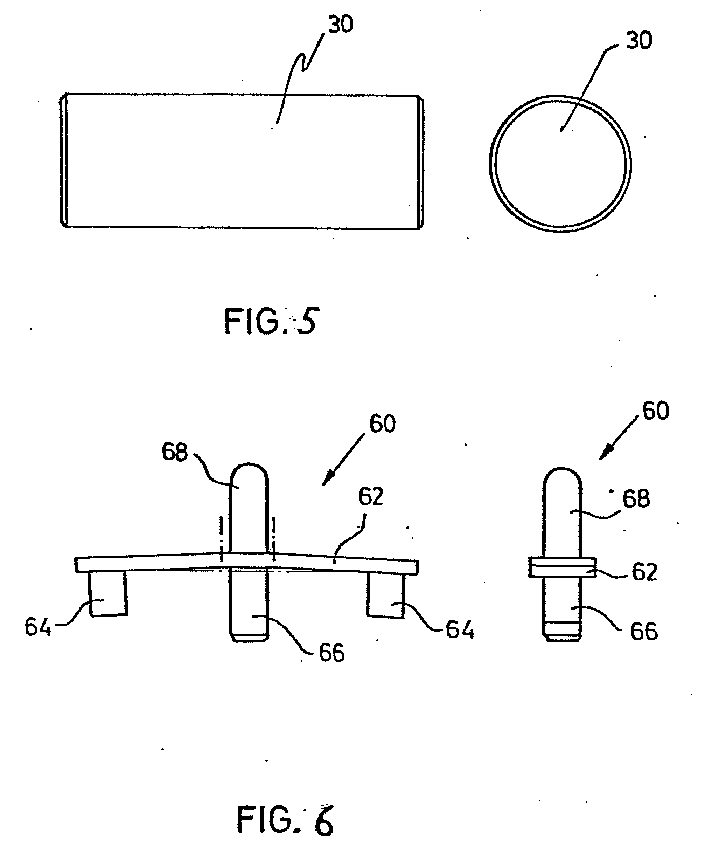

Fig. 5 einen bei der erfindungsgemäßen Membranfilterplatte verwendbaren Dübel in der
Seiten- und in der Stirnansicht

Fig. 6 eine bei der erfindungsgemäßen Membranfilterplatte verwendbare Halteklammer in
der Seiten- und in der Vorderansicht;

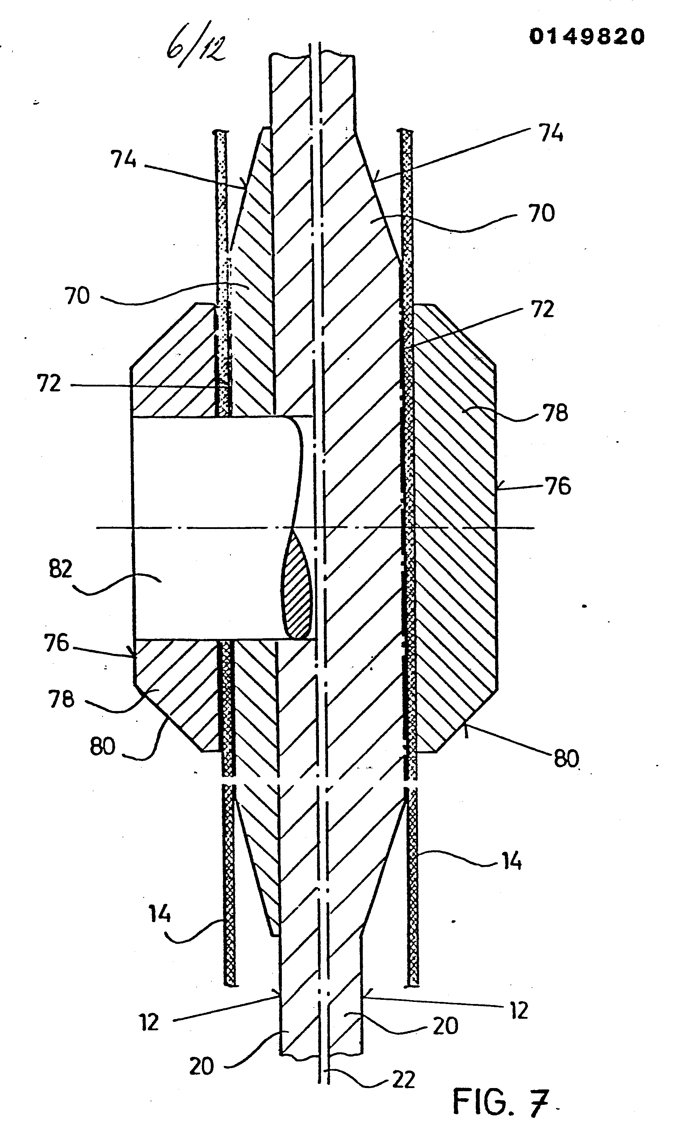

Fig. 7 einen Stütznocken eines Ausführungsbeispieles der Erfindung im Schnitt senkrecht zu Trägerplattenmittelebene;

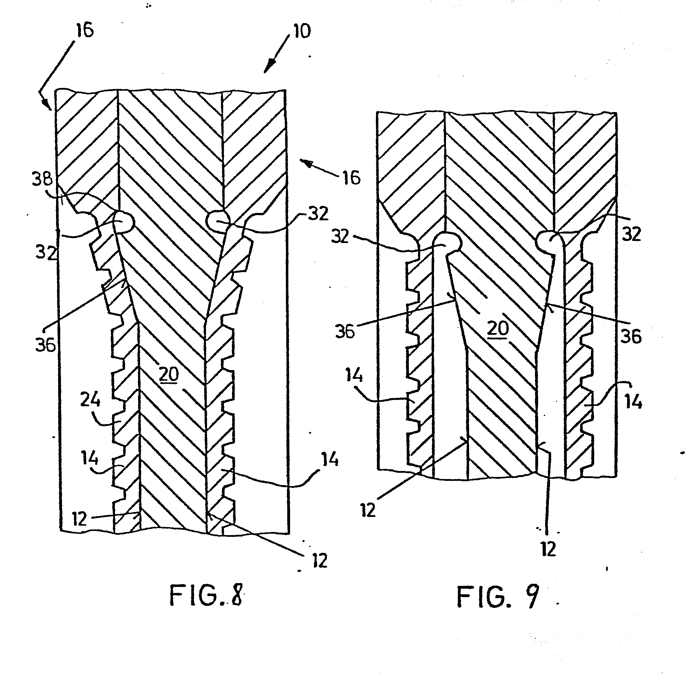

Fig. 8 im Schnitt senkrecht zur Plattenebene den
dem Dichtrand benachbarten Bereich eines
ersten Ausführungsbeispieles der Membranfilterplatte nach der Erfindung in der
Filtrationsphase;

Fig. 9   in mit Fig. 8 übereinstimmender Darstellung den Dichtrandbereich des dort
gezeigten Ausführungsbeispieles in unbelastetem Zustand der Membran;

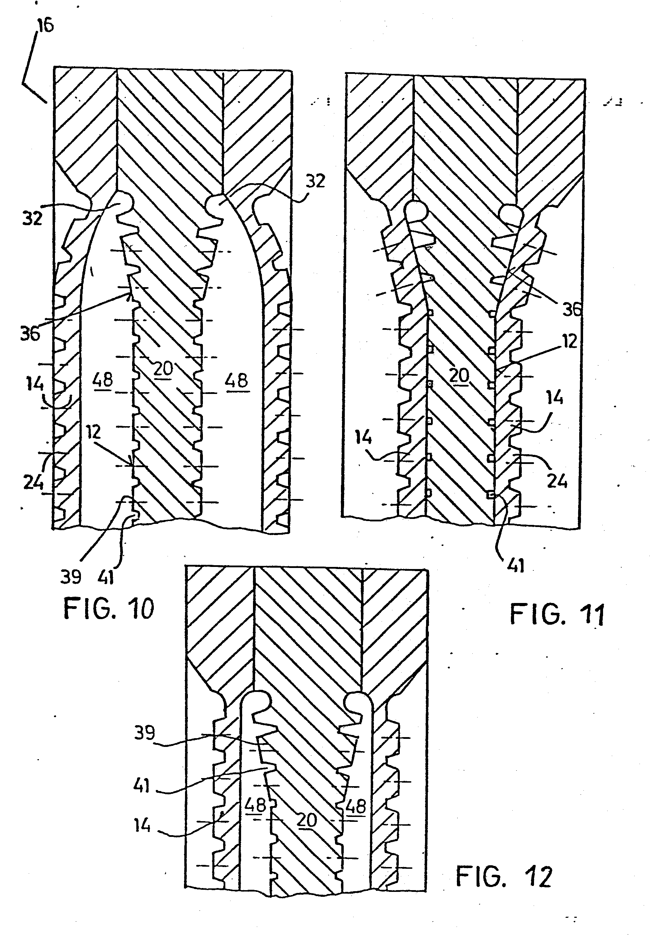

Fig. 10  in ähnlicher Darstellung wie Fig. 8 den
Dichtrandbereich eines zweiten Ausführungsbeispieles einer Membranfilterplatte nach der Erfindung in der Preßphase;

Fig. 11  den in Fig. 10 gezeigten Dichtrandbereich in der Filtrationsphase;

Fig. 12  den in Fig. 10 und Fig. 11 wiedergegebenen Dichtrandbereich in unbelastetem
Zustand der Membran;

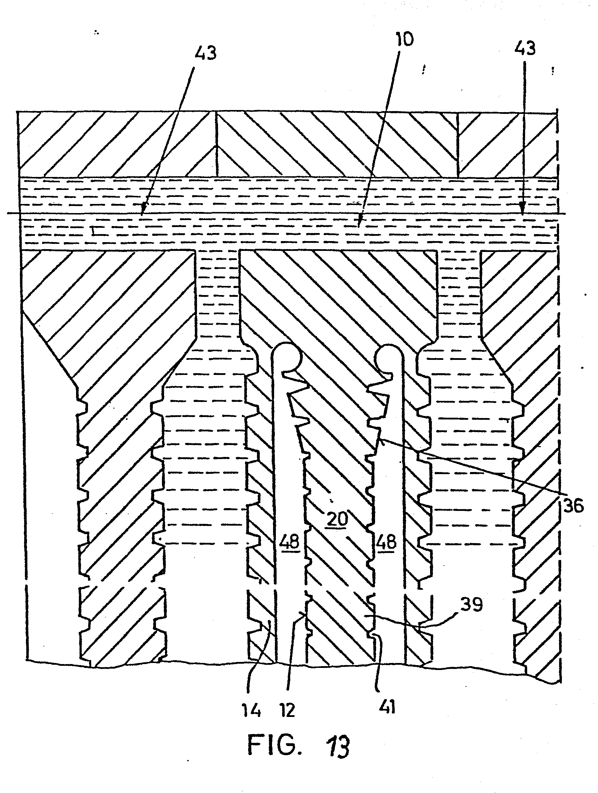

Fig. 13  den Dichtrandbereich der in den Fig. 10
bis 12 wiedergegebenen Membranfilterplatte in in eine Filterpresse eingebautem Zustand, Membran unbelastet;

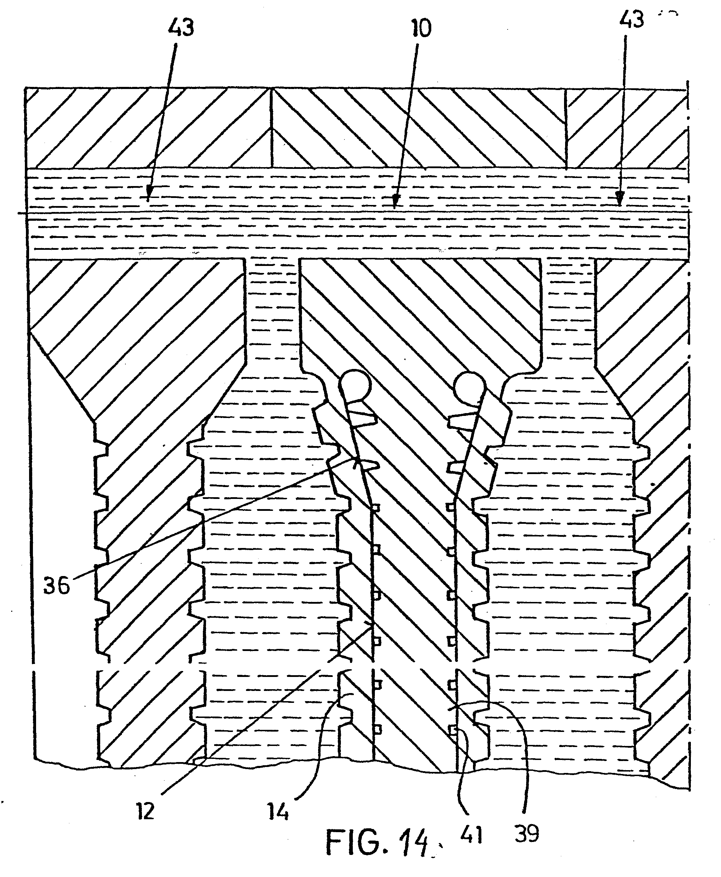

Fig. 14  den in Fig. 13 wiedergegebenen Dichtrandbereich in der Filtrationsphase;

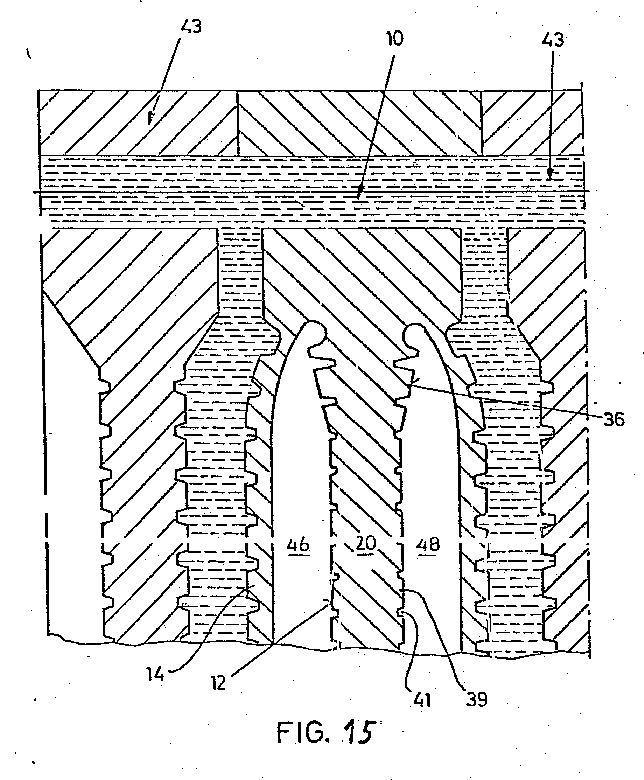

Fig. 15  den in Fig. 13 und 14 wiedergegebenen
Dichtrandbereich in der Preßphase;

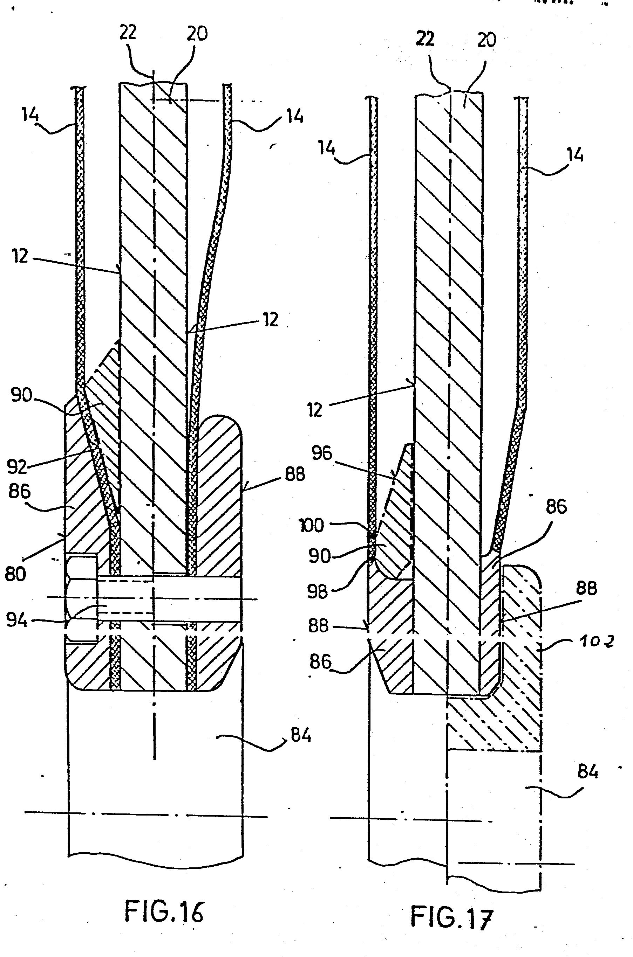

Fig. 16  einen Schnitt durch einen Zentraleinlauf
eines Ausführungsbeispieles der Erfindung;
und

Fig. 17 einen Schnitt durch ein anderes Ausführungs-
       beispiel eines Zentraleinlaufes der er-
       findungsgemäßen Membranfilterplatte.

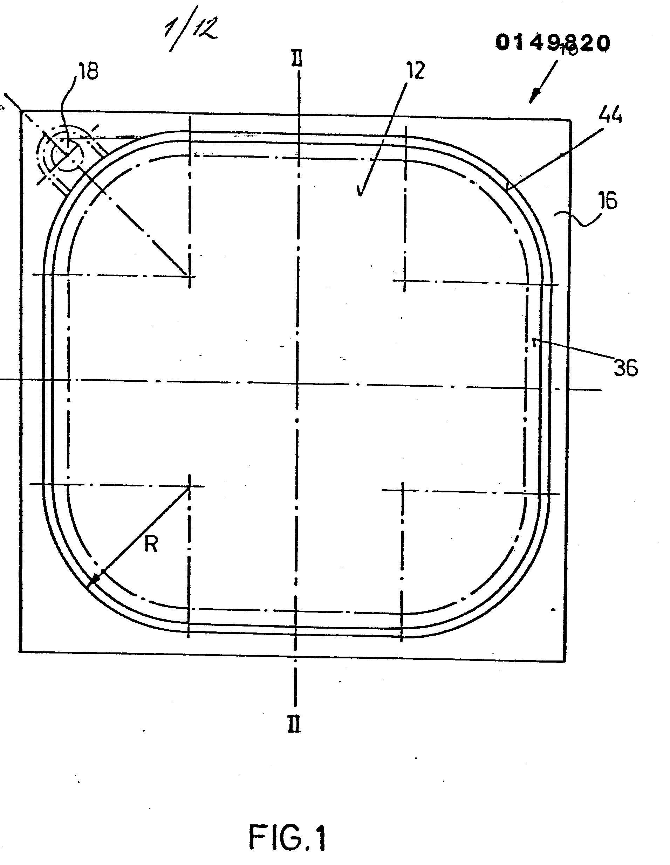

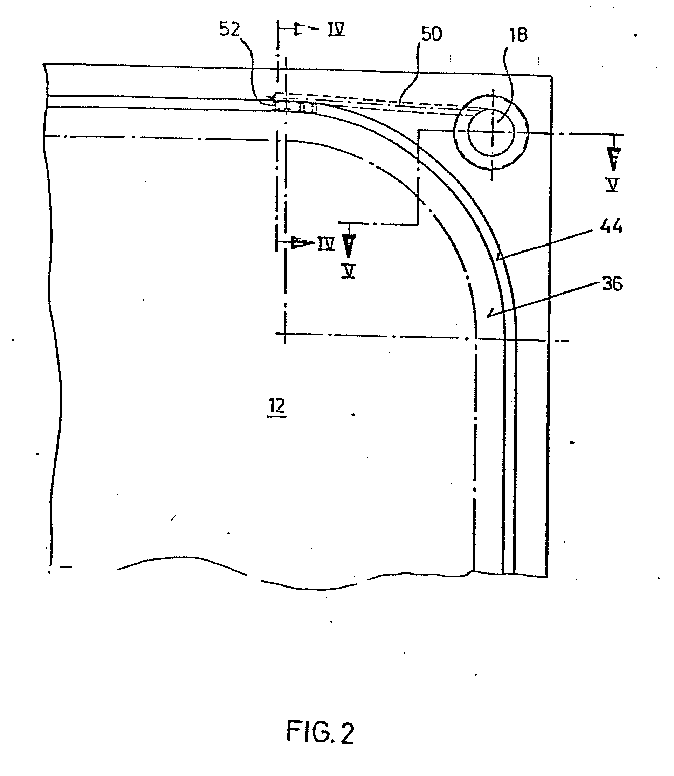

Wie Fig. 1 erkennen läßt, weist die dort in der Draufsicht
gezeigte Membranfilterplatte 10 in ihrem Zentralbereich eine
im wesentlichen ebene Trägerplattenfläche 12 auf, die von
einer in Fig. 1 nicht erkennbaren, jedoch in Fig. 2 dargestellten Membran 14 aus flexiblem Material, wie Kunststoff,
Gummi oder dergleichen, abgedeckt ist, die wiederum im Randbereich 16 der Membranfilterplatte dichtend gehalten ist.
Fig. 1 läßt weiterhin erkennen, daß eine Eckeinlaufbohrung 18 vorgesehen ist und daß die vier Schmalseiten der Membran 14
jeweils durch Viertelkreise mit dem Radius R miteinander
verbunden sind. Handelt es sich um eine Membranfilterplatte
im herkömmlichen Format von 1200 x 1200 mm, so beträgt der
Radius R beispielsweise 320 mm.

Beidseits der Trägerplatte 20,    deren    Längsmittelebene mit
22 bezeichnet ist, ist jeweils eine der Membranen 14 angeordnet. Die Membran 14, die an ihrer der Trägerplattenfläche
12 abgewandten Seite mit Distanznocken 24, Distanzrippen oder
dergleichen zum Anlegen eines Filtertuches 26 versehen ist,
ist dichtend zwischen dem Randbereich 16 der Trägerplatte 20
und einem Dichtrandrahmen 28 aufgenommen. Die Membran 14
liegt im Einbauzustand in ihrer unbelasteten Normalstellung,
wobei sie also eine im wesentlichen ebene Tafel bildet. Der
Dichtrandrahmen ist mittels eines Dübels 30 mit dem Randbereich 16 der Trägerplatte 20 verbunden, wobei der Dübel in
der ihn aufnehmenden Bohrung mit Klemmsitz aufgenommen ist, hier aber auch verklebt oder verschweißt sein kann, sofern das
Material, aus dem die Membran 14 besteht, dies zuläßt. Natürlich wäre auch eine Schraubverbindung zwischen Dichtrandrahmen 28 und Trägerplatte 20 möglich.

Fig. 2 zeigt den Eckbereich einer Membranfilterplatte mit Zu-
bzw. Ablaufbohrungen. Dabei ist erkennbar, daß eine
Eckeinlaufbohrung 18 über einen Kanal 50 mit einer Reihe von
Querbohrungen 52 in Verbindung steht, die mit der jeweiligen
Filterkammer kommunizieren. Der Kanal 50 ist in die Oberfläche des Dichtrandrahmens 28 eingefräst, ebenso wie
die Querbohrungen 52 zu der der Membran 14 zugewandten
Dichtfläche des Dichtrandrahmens 28 hin offen sind. Hierdurch ergibt sich eine besonders leichte Bearbeitungsmöglichkeit, weil die seitlichen Enden der Kanäle 60 bei der
Herstellung des Dichtrandrahmens 28 von vornherein verschlossen gehalten werden können, wodurch die Notwendigkeit eines nachfolgenden Auffüllens durch Verschweißen
oder dergleichen entfällt. Allerdings läßt sich die offene
Kanalausbildung nur dann verwenden, wenn der Dichtrandrahmen
28 nicht mit der Trägerplatte 20 verschweißt wird, da natürlich ansonsten die entsprechenden Kanäle bzw. Bohrungen
oder Nuten leicht verschmieren könnten.

Demgegenüber sind der Kanal 50 und die Querbohrungen 52 in
das Material des Dichtrandrahmens 28 eingearbeitet, so daß
bei dieser Ausführungsform auch eine leichte Verschweißbarkeit gegeben ist. Eine Verschweißung scheidet natürlich
ohnehin aus, sofern die Membran 14 aus Gummi oder dergleichen
besteht.

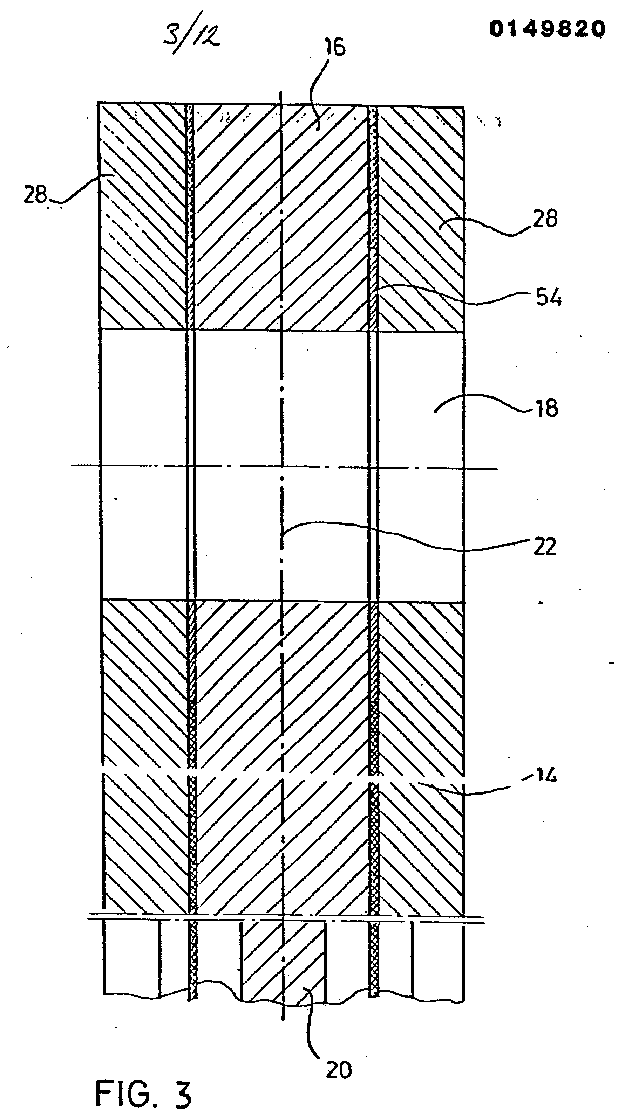

Fig. 3 zeigt eine Eckeinlaufbohrung 18 der bereits diskutierten Art, bei welcher die eigentliche Bohrung von einer
Ringdichtung 54 aus dichtendem Material umgeben ist. Diese
Ausführungsform empfiehlt sich dann, wenn die Membran 14
nicht aus selbstdichtendem Material besteht, beispielsweise
also dann, wenn die Membran 14 ebenso wie die Trägerplatte
20 bzw. die Dichtrandrahmen 28 aus Kunststoff, wie Polypropylen oder dergleichen, besteht.

Aus der Detaildarstellung von Fig. 4 geht hervor, daß dort
eine Eckbohrung 18, die natürlich hier nicht als Einlauf
dient, mittels eines Dübels 30 verschlossen und daraufhin
der kreuzschraffiert gezeichnete Eckbereich 56 verschweißt
worden ist. Die Verschweißung eines oder mehrerer Eckbereiche 56 kann beispielsweise durch Widerstandsschweißung
(mit eingelegtem Kupferdraht oder dergleichen) erfolgen,
wobei bedarfsweise noch zusätzliche Halteelemente verwendet
werden können, wie diese anhand von Fig. 6 noch im einzelnen
erläutert werden, obwohl die dort gezeigten Halteeinrichtungen auch ohne jedwede Verschweißung der einzelnen Membranfilterplattenelemente verwendbar sind.

Fig. 5 zeigt eien der bereits genannten Dübel 30, die, wie
dargestellt, nahe ihren Enden konisch zulaufend ausgebildet
sein können, um so das Eintreiben in Bohrungen 18 der beschriebenen Art zu erleichtern. Die Dübel 30 verlaufen also
in eingebautem Zustand stets senkrecht zur Trägerplattenmittelebene 22 und dienen dazu, entweder, bei Schweißverbindungen, die in dem jeweiligen Schweißbereich (wie 56)
vorgesehenen Bohrungen 18 zu verschließen oder aber entsprechend ihrem Klemmsitz, der beispielsweise verwendet werden kann, innerhalb der Bohrungen 18 die Einzelelemente der Membranfilterplatte gegen parallel zur Trägerplattenmittelebene, also radial, wirkende Kräfte zu sichern. Bei geeigneter Verbindung mit dem sie umgebenden Material, beispielsweise durch Schweißen, Kleben, durch starken Klemmsitz oder durch Verschraubung, können die Dübel 30 natürlich auch senkrecht zur Trägerplattenmittelebene 22 wirkende Kräfte aufnehmen.

Zum Zusammenhalten der Membranfilterplattenelemente gegen derartige senkrecht zur Trägerplattenmittelebene 22 wirkenden Kräfte dienen jedoch im wesentlichen Halteklammern 60 der in Fig. 6 gezeigten Art. Wie dort erkennbar ist, weist die Halteklammer 60 einen Steg sowie an der in Fig. 6 unten liegenden Seite zwei Rahmenzapfen 64 und einen zentralen Plattenzapfen 66 auf. Die Rahmenzapfen 64 bzw. der Plattenzapfen 66 werden in die Bohrungen der Dichtrandrahmen 28 bzw. des Randbereiches 16 der Trägerplatte 20 eingesetzt, wobei die Verbindung auch hier mit Klemmsitz, durch Verschweißen etc., wie weiter oben in Verbindung mit den Dübeln 30 dargelegt, erfolgen kann. An der dem Plattenzapfen 66 gegenüberliegenden Seite des Steges 62 ist ein an seinem freien Ende abgerundeter Haltezapfen 68 angeordnet, der zum Einhängen des Filtertuches 26 dient. Rings um die Membranfilterplatte ist eine Vielzahl derartiger Halteklammern 60 vorgesehen, so daß nicht nur ein zuverlässiges Zusammenhalten der Membranfilterplattenelemente gegen senkrecht zur Trägerplattenmittelebene 22 wirkende
Kräfte gewährleistet ist, sondern auch die Filtertücher 26
in hinreichender Weise mittels der abgerundeten Haltezapfen
68 befestigt werden können. Die Halteklammer 60 kann vorzugsweise aus Kunststoff hergestellt sein, jedoch sind auch andere Materialien, wie Metall, möglich. Der Steg 62 ist im
übrigen vorzugsweise, wie aus Fig. 6 ersichtlich, leicht
gewinkelt ausgebildet, um so eine innere Spannung der Halteklammer 60 zu erzielen, die den gegebenenfalls erwünschten
Klemmsitz der Zapfen 64, 66 in den Bohrungen fördert.

Fig. 7 zeigt zwei Ausführungsbeispiele eines gegebenenfalls
bei der erfindungsgemäßen Membranfilterplatte vorhandenen
Stütznockens. Jeder der Stütznocken weist ein von der Trägerplattenfläche 12 im wesentlichen bis zur Ebene der Membran 14 in deren unbelasteter Normalstellung vorspringendes
Basisteil 70 auf, welches bei der Ausführungsform gemäß Fig.
10, rechts, einstückig mit der eigentlichen Trägerplatte 20
ausgebildet ist, während es sich bei dem Ausführungsbeispiel
von Fig. 10, links, um ein separates Basisteil 70 handelt.
Das Basisteil 70 weist jeweils eine parallel zur Trägerplattenmittelebene 22 verlaufende Stirnfläche 72 und eine von
dieser schräg zur Trägerplattenfläche 12 verlaufende Übergangsfläche 74 auf. Weiterhin weist der Stütznocken ein im
wesentlichen von der Ebene der Membran 14 in deren unbelasteter Normalstellung bis zu einer Stützfläche 76 vorstehendes Stützteil 78 auf, von dessen im wesentlichen ebener
Stützfläche 76 aus eine ebenfalls schräge Übergangsfläche 80
in Richtung auf die Membran 14 verläuft. Sowohl die Übergangsfläche 74 des Basisteils 70 als auch die Übergangsfläche 80 des Stützteiles 78 sind dabei nahe ihrem der

0149820

Stirnfläche 72 bzw. der Stützfläche 76 abgewandten Ende stufenförmig abgesetzt.

Das Basisteil 70 und/oder das Stützteil 78 können mit der Trägerplatte 20 unter Einschluß der Membran 14 auf verschiedene Weise verbunden, beispielsweise verschweißt, verschraubt oder verdübelt sein, wobei wegen der Einzelheiten auf die Darlegungen weiter oben hinsichtlich der Dübel 30 verwiesen sei. In Fig. 7 links, ist jedenfalls eine Zentralschraube 82 gezeigt, die gegebenenfalls in ein Innengewinde der entsprechenden Bohrung der Trägerplatte 20 eingeschraubt sein könnte. Es könnte natürlich aber auch eine die Gesamtanordnung senkrecht zur Trägerplattenmittelebene 22 durchsetzende Bohrung vorgesehen sein, in welche die Schraube 82 eingeschraubt wäre, gegebenenfalls unter Verwendung einer nicht gezeigten Kontermutter.

Wie Fig. 8 und 9 erkennen lassen - in Fig. 9 liegt die Membran 14 im Einbauzustand in ihrer unbelasteten Normalstellung, wobei sie also eine im wesentlichen ebene Tafel bildet, während sie in Fig. 8 in der sogenannten Filtrationsphase gezeigt ist, in der sie also jeweils in Richtung auf die Trägerplatte 20 durch ein unter Druck stehendes zu filterndes Medium beaufschlagt ist -, sind bei dem dort gezeigten Ausführungsbeispiel die der Membran 14 zugewandten Oberflächen der Trägerplatte 20 unter Vermeidung definierter Biegelinien als mit kontinuierlich sich ändernder Biegung von der Trägerplattenfläche 12 im Zentralbereich der Trägerplatte 20 in den Randbereich der Trägerplatte übergehende Schmiegeflächen 36 ausgebildet, deren Übergang in den Randbereich der Trägerplatte 20 im Anschluß an eine Schweißaustriebsnut 32 im Bereich einer Verbindungsstelle 38
der Membran 14 mit dem Dichtrand erfolgt. Die Schmiegefläche 36 gewährleistet, daß sich auch verhältnismäßig
dicke und wenig flexible Membranen 14 ohne jedwede Sollbiegelinien verwenden lassen, ohne daß es im randnahen
Einspannbereich der Membranen zu unzulässigen Materialbeanspruchungen käme. Fig. 8 und 9 lassen darüberhinaus
erkennen, daß die Schmiegefläche 36 etwa in der Mitte
des Überganges zwischen der Trägerplattenfläche 12
und dem Randbereich 16 einen ebenen Mittelbereich aufweist.

Bei dem in den Fig. 10 bis 12 gezeigten Ausführungsbeispiel
sind die den Membranen 14 zugewandten Oberflächen der
Trägerplatte 20 jeweils mit einer Vielzahl von Abstandsnocken 39 versehen, wodurch in der Trägerplattenfläche 12
und in der Schmiegefläche 36 ein System von Kühlmittelkanälen 41 gebildet ist. Hierdurch ist es möglich, eine
zwischen der Trägerplatte 20 und der Membran 14 gebildete
Membrankammer 48 kontinuierlich, d.h. beispielsweise auch
in der in Fig. 11 gezeigten Filtrationsphase, in der die
Membranen 14 unter dem Druck des zu filternden Mediums
an die Trägerplatte 20 angepreßt sind, mit Kühlmittel
zu beaufschlagen, welches also die Membrankammer 48
bzw. das Kühlmittelkanalsystem 41 kontinuierlich durchströmt, wodurch eine effektive thermische Trennung
zwischen der Trägerplatte 20 und den Membranen 14 gewährleistet ist. Die Abstandsnocken 39 sind dabei vorzugsweise, wie in den Fig. 10 bis 12 deutlich zu erkennen,
im Bereich der Schmiegefläche 36 entsprechend deren allgemeinem Verlauf angeschrägt, um auf diese Weise eine kontinuierliche Biegung der Membran 14 in den verschiedenen
Betriebszuständen zu erzielen.

Die Fig.13 bis 15 zeigen einen Ausschnitt aus einer Filterpresse, in der eine Membranfilterplatte 10 jeweils zwischen zwei nicht mit Membranen versehenen Kammerfilterplatten 43 angeordnet ist. Durch diese Anordnung wird
die in Fig. 15 deutlich erkennbare "Ausbeulwirkung" der
Membran 14 unter dem Einfluß des unter Druck auf die
Membrankammer 48 aufgegebenen Fließmittels, welches
gleichzeitig als Kühlmittel auch in der in Fig. 14 gezeigten Filtrationsphase , dient, besonders weitgehend
ausgenutzt. Selbstverständlich wird im Betrieb jeweils
so vorgegangen, daß in der in Fig.14 gezeigten Filtrationsphase das Fließmittel in die Membrankammer 48
mit wesentlich geringerem Druck eingegeben wird, bzw.
das Kühlmittelkanalsystem 41 mit wesentlich geringerem
Druck durchströmt, als dies in der in Fig.15 gezeigten
Preßphase der Fall ist.

In Fig. 16 und 17 sind verschiedene Ausführungsbeispiele des
Zentralbereiches einer Membranfilterplatte mit zentralem Filtrationseinlauf wiedergegeben. Die Membran 14 ist dabei in
dem die Zentraleinlaufbohrung 84 umgebenden Dichtungsbereich
über ein ringförmiges Haltestück 86, dessen verschiedene
Ausführungsformen noch näher zu erläutern sein werden,
dichtend mit der Trägerplatte 20 verbunden. Die der Trägerplatte 28 abgewandte Stirnfläche 88 der verschiedenen
Haltestücke 86 hat dabei jeweils von der Trägerplattenfläche
12 einen geringeren Abstand als die der Trägerplattenmittelebene 22 parallele Umfangsfläche    des Dichtrandrahmens bzw. der Dichtrandrahmen 28.

Bei dem in Fig. 16 ganz links gezeigten Ausführungsbeispiel
ist die Zentraleinlaufbohrung 84 mit Abstand von einem
Stützring 90 umgeben, dessen Innendurchmesser größer ist als
der Durchmesser der Zentraleinlaufbohrung 84. Der Stützring
90 weist bei dem Ausführungsbeispiel von Fig. 16, links,
eine von der Ebene der Membran 14 in deren unbelasteter Normalstellung in Richtung auf die Zentraleinlaufbohrung 84 im
wesentlichen schräg bis zur Trägerplattenfläche 12 verlaufende Schmiegefläche 92 auf, wobei das Haltestück 86 bei dem
in Fig. 16 links gezeigten Ausführungsbeispiel in dem
der Schmiegefläche 92 entsprechenden Bereich komplementär zu
dieser ausgebildet ist, so daß also die Membran 14 zwischen
dem Haltestück 86 und dem Stützring 90 klemmend gehalten
ist.

In hiervon abgewandelter Form ist das Haltestück 86 bei dem
Ausführungsbeispiel von Fig. 16, rechts, an seinem der Zentraleinlaufbohrung 84 abgewandten Rand abgerundet ausgebildet, wobei hier die Membran 14 ohne Zwischenschaltung
eines Stützringes oder dergleichen unmittelbar in den Dichtspalt zwischen dem Haltestück 86 und der Trägerplattenfläche
12 einläuft. Die beiden Haltestücke 86 sind im übrigen bei
dem in Fig. 16 gezeigten Ausführungsbeispiel durch eine
Schraube 94, die entweder mit einer entsprechenden Innenbohrung oder aber einer Gegenmutter oder Gegenhülse zusammenwirkt, fest miteinander verbunden. Es kann auch eine Gesamtverschraubung vorgesehen sein, wie sie in Figur 17 gezeigt ist.

Haltestück 86 und/oder Stützring 90 können im übrigen mit der Trägerplatte 22 und/oder der Membran in einer der bereits beschriebenen Weisen verschweißt, verklebt oder verdübelt sein. Dies gilt auch für das in Fig. 17, links gezeigte Ausführungsbeispiel des Zentraleinlaufes, bei dem die Membran 14 einstückig mit dem Haltestück 86 ausgebildet ist. An der Trägerplatte 20 liegt dabei auch hier ein Stützring 90 an, wobei dieser aber in ähnlicher Weise wie der weiter oben beschriebene Dichtrandrahmen 28 so ausgebildet ist, daß die der Membran zugewandte Stirnfläche 96 des Stützringes 90 von dessen Innenkante aus zur Erzeugung zweier Sollbiegelinien 98, 100 zunächst im wesentlichen parallel zur Trägerplattenmittelebene 22, dann schräg auf diese hin verlaufend und abschließend abgestuft zur Trägerplattenfläche 12 ausgebildet ist. Hierdurch wird bei einer Druckbelastung der Membran 14 die bereits weiter oben im Zusammenhang mit dem Dichtrandrahmen 28 im einzelnen erörterte Doppelscharnierwirkung erzielt.

Bei dem in Fig. 17., rechts, gezeigten Ausführungsbeispiel ist die Membran 14 ebenfalls einstückig mit dem Haltestück 86 ausgebildet, jedoch ist dieses dabei so dünn, daß keine untunliche Biegebeanspruchung der Membran 14 zu besorgen ist, so daß hier auf den Stützring verzichtet werden kann. Fig. 17. zeigt rechts weiterhin noch einen die Zentraleinlaufbohrung 84 durchsetzenden Klemmring 102 zum Zusammenhalten der Haltestücke 86 und der Trägerplatte 20, der natürlich auch bei den anderen gezeigten Ausführungsbeispielen des Zentraleinlaufes vorgesehen sein kann.

Die Einzelteile der vorstehend beschriebenen Membranfilterplatte können bei allen Ausführungsbeispielen zumindest teilweise aus Kunststoff bestehen, wobei es von besonderem Vorteil ist, daß die Materialeigenschaften jedes Einzelteiles in Abhängigkeit von den jeweiligen Anforderungen optimiert werden können. So kann insbesondere die Membran aus selbstdichtendem Material, beispielsweise aus Gummi, bestehen und ist darüber hinaus auswechselbar, wodurch sich eine weite Variationsbreite in den Anwendungsmöglichkeiten der erfindungsgemäßen Membranfilterplatte ergibt.

Die vorstehend beschriebenen Kühlmittelkanäle 41 lassen sich natürlich auch in der weiter oben bereits beschriebenen Weise als Heizmittelkanäle verwenden (Fig. 10 bis 12). Dabei ist es dann also möglich, die Membrankammer 48 kontinuierlich mit Heizmittel zu beaufschlagen, welches also die Membran 48 bzw. das Kanalsystem 41 kontinuierlich durchströmt, wodurch die Temperatur sowohl der Trägerplatte 20 als auch insbesondere der elastischen Membran 14 auf einer höheren Temperatur als derjenigen des zu filternden Mediums gehalten werden kann.

FB 512/R

A n s p r ü c h e
============================

1. Membranfilterplatte für eine Filterpresse oder dergleichen, mit einer Trägerplatte (20), wenigstens einer
an einer Seite der Trägerplatte angeordneten, vorzugsweise mit Distanznocken oder dergleichen zum Auflegen
eines Filtertuches oder dergleichen versehenen Membran
(14) und einem die Trägerplatte (20) und die Membran (14)
umgebenden, diese im wesentlichen fließmitteldicht niteinander verbindenden Dichtrand, dessen der Trägerplattenmittelebene parallele Umfangsfläche(n) auf der die Membran
(14) aufweisenden Seite bzw. beidseits der Trägerplatte
(20) mit Abstand von der Membranebene in deren unbelasteter Normalstellung angeordnet ist bzw. sind, wobei
die der Membran (14) zugewandte Anlagefläche (36) der
Trägerplatte (20) in einem zwischen der Verbindungslinie
der Membran (14) mit dem Dichtrand und dem Zentralbereich
der Trägerplatte, in dem sie sich parallel zur Trägerplattenmittelebene erstreckt, gelegenen Übergangsbereich
auf die Trägerplattenmittelebene hin verläuft, dadurch
gekennzeichnet, daß die Anlagefläche in dem Übergangsbereich unter Vermeidung definierter Biegelinien als mit
kontinuierlich sich ändernder Biegung von der Verbindungsstelle (3') in die Trägerplattenfläche (12) im Zentralbereich der Trägerplatte (20) übergehende Schmiegefläche
(36) ausgebildet ist.

2. Membranfilterplatte nach Anspruch 1, dadurch gekennzeichnet, daß die Schmiegefläche (36) einen im wesentlichen ebenen Mittelbereich aufweist.

3. Membranfilterplatte nach Anspruch 1 oder 2, dadurch
gekennzeichnet, daß der Dichtrand wenigstens auf einer
Seite der Trägerplattenmittelebene (22) durch einen
Dichtrandrahmen (28) gebildet ist, zwischen dem und
der sich bis zur senkrecht zur Trägerplattenmittelebene (22) verlaufenden Randfläche der Membranfilterplatte (10) erstreckenden Trägerplattenfläche (12)
die Membran (14) dichtend aufgenommen ist.

4. Membranfilterplatte nach Anspruch 3, dadurch gekennzeichnet, daß die Trennebene zwischen dem Dichtrandrahmen (28) und der Trägerplattenfläche (12) im
Randbereich (16) der Trägerplatte (20) im wesentlichen
in der Ebene der Membran (14) in deren unbelasteter
Normalstellung liegt.

5. Membranfilterplatte nach Anspruch 3 oder 4, dadurch
gekennzeichnet, daß der Dichtrandrahmen (28) mit der
Trägerplatte (20) wenigstens bereichsweise mittels in
dem bzw. den Dichtrandrahmen (28), der Trägerplatte
(20) und der Membran bzw. den Membranen (14) vorgesehene, senkrecht zur Trägerplattenmittelebene (22)
verlaufende Bohrungen (18) durchsetzender Dübel (30)
verbunden ist.

6. Membranfilterplatte nach Anspruch 5, dadurch gekennzeichnet, daß die den Dübel (30) umgebende Membranbohrung einen größeren Durchmesser hat als der Dübel (30) und in den so gebildeten, den Dübel (30) umgebenden Ringraum eine Ringdichtung (54) eingelegt ist.

7. Membranfilterplatte nach einem der Ansprüche 3 bis 6, dadurch gekennzeichnet, daß die beidseitig eine Membran (14) aufweisende Trägerplatte (20) mit den beiden Dichtrandrahmen (28) durch eine Halteklammer (60) aus Kunststoff, Metall oder dergleichen verbunden ist.

8. Membranfilterplatte nach Anspruch 7, dadurch gekennzeichnet, daß die Halteklammer (60) einen senkrecht zur Trägerplattenmittelebene (22) verlaufenden Steg (62) und zwei parallel zur Trägerplattenmittelebene (22) nach innen verlaufende Rahmenzapfen (64) aufweist, die in entsprechende Bohrungen der Dichtrandrahmen (28) eingreifen.

9. Membranfilterplatte nach Anspruch 8, dadurch gekennzeichnet, daß die Halteklammer (60) einen zentralen, im wesentlichen in der Trägerplattenmittelebene (22) liegenden nach innen vorstehenden Plattenzapfen (66) aufweist, der in eine entsprechende Bohrung des Trägerplattenrandes (16) eingreift.

10. Membranfilterplatte nach einem der Ansprüche 7 bis 9, dadurch gekennzeichnet, daß die Halteklammer (60) einen im wesentlichen in der Trägerplattenmittelebene (22) nach außen vorspringenden Haltezapfen (68) zum Einhängen des Filtertuches (26) aufweist.

11. Membranfilterplatte nach einem der vorangehenden
Ansprüche, wobei im Zentralbereich der Trägerplatte
wenigstens ein vorzugsweise kreisrunder Stütznocken
vorgesehen ist, dessen der Trägerplattenmittelebene
parallele Stützfläche (76) im wesentlichen mit der der
Trägerplattenmittelebene parallelen Umfangsfläche des
Dichtrandes fluchtet, dadurch gekennzeichnet, daß der Stütznocken ein von der Trägerplattenfläche (12) im wesentlichen bis zur Ebene der Membran (14) in deren
unbelasteter Normalstellung vorspringendes Basisteil (70), welches eine parallel zur Trägerplattenmittelebene (22) verlaufende Stirnfläche (72) und
eine von dieser schräg zur Trägerplattenfläche (12)
hin verlaufende Übergangsfläche (74) besitzt, sowie
ein im wesentlichen von der Ebene der Membran (14)
in der unbelasteten Normalstellung bis zu der Stützfläche (76) vorstehendes Stützteil (78) aufweist,
von dessen im wesentlichen ebener Stützfläche (76)
eine ebenfalls schräge Übergangsfläche (80) in
Richtung auf die Membran (14) verläuft.

12. Membranfilterplatte nach Anspruch 11, dadurch gekennzeichnet, daß die Übergangsfläche (74) des Basisteiles (70) und/oder die Übergangsfläche (80) des
Stützteiles (78) an ihrem der Stirnfläche (72) bzw.
Stützfläche (76) abgewandten Ende stufenförmig abgesetzt ist.

13. Membranfilterplatte nach einem der vorangehenden
Ansprüche mit Zentraleinlauf, dadurch gekennzeichnet,
daß die Membran (14) in dem die Zentraleinlaufbohrung
(84) umgebenden Dichtungsbereich über ein ringförmiges Haltestück (86) dichtend mit der Trägerplatte (20) verbunden ist, dessen der Trägerplatte (20) abgewandte Stirnfläche (88) von der Trägerplattenfläche (12) einen geringeren Abstand hat als die der Trägerplattenmittelebene (22) parallele(n) Umfangsfläche(n) (34) des Dichtrandes.

14. Membranfilterplatte nach Anspruch 13, dadurch gekennzeichnet, daß das Haltestück (86) an seinem der Zentraleinlaufbohrung (84) abgewandten Rand abgerundet ausgebildet ist.

15. Membranfilterplatte nach Anspruch 12 oder 13, dadurch gekennzeichnet, daß die Zentraleinlaufbohrung (84) von einem Stützring (90) umgeben ist, dessen Innendurchmesser größer ist als der Durchmesser der Zentraleinlaufbohrung und an dem die Membran (14) anliegt.

16. Membranfilterplatte nach Anspruch 15, dadurch gekennzeichnet, daß der Stützring (90) eine von der Ebene der Membran (14) in deren unbelasteter Normalstellung in Richtung auf die Zentraleinlaufbohrung (84) im wesentlichen schräg bis zur Trägerplattenfläche (12) verlaufende Schmiegefläche (92) aufweist; und daß das Haltestück (86) in dem der Schmiegefläche (92) entsprechenden Bereich komplementär zu dieser ausgebildet ist.

17. Membranfilterplatte nach Anspruch 16, dadurch gekennzeichnet, daß die der Membran (14) zugewandte Stirnfläche (96) des Stützringes von dessen Innenkante aus zur Erzeugung zweier Sollbiegelinien (98, 100) der Membran zunächst im wesentlichen parallel zur Trägerplattenmittelebene (22), dann schräg auf diese hin verlaufend und anschließend abgestuft zur Trägerplattenfläche (12) hin ausgebildet ist.

18. Membranfilterplatte nach einem der Ansprüche 13 bis 17, gekennzeichnet durch einen die Zentraleinlaufbohrung (84) durchsetzenden Klemmring (102) zum Zusammenhalten von Haltestück(en) (86) und Trägerplatte (20).

19. Membranfilterplatte nach einem der vorangehenden Ansprüche, dadurch gekennzeichnet, daß bei im wesentlichen viereckiger Ausbildung von Dichtrand (28) und Trägerplatte (20) der Übergang zwischen den Schmalseiten der Membran (14) jeweils durch einen Viertelkreis gebildet ist.

20. Membranfilterplatte nach einem der vorangehenden Ansprüche, dadurch gekennzeichnet, daß der Abstand der Membran (14) von der Trägerplattenfläche (12) ca. 1/3 des Abstandes der zur Trägerplattenmittelebene (22) parallelen Umfangsfläche (34) des Dichtrandes (28) beträgt.

21. Membranfilterplatte nach einem der Ansprüche 3 bis 20,

0149820

dadurch gekennzeichnet, daß die Trägerplatte (20) in ihrem
dem Dichtrahmen (28) benachbarten Randbereich (16) eine
im wesentlichen umlaufende Schweißaustriebsnut (32) aufweist.

FIG.1

0149820

M 19·12·84

FIG. 2

0149820

FIG. 3

FIG. 4

4/12

0149820

M 19·12·84

30

30

FIG. 5

60

68

62

64

66

64

60

68

62

66

FIG. 6

0149820

74

74

70

70

72

72

78

76

82

76

78

80

80

14

14

12

12

20

20

22

FIG. 7

0149820

FIG. 8          FIG. 9

0149820

FIG. 10

FIG. 11

FIG. 12

0149820

FIG. 13

FIG. 14

0149820

FIG. 15

FIG.16

FIG.17